Europäisches Patentamt

(19) European Patent Office

Office européen des brevets

(11) Veröffentlichungsnummer: **0 014 778**
**B1**

(12) **EUROPÄISCHE PATENTSCHRIFT**

(45) Veröffentlichungstag der Patentschrift: **18.05.83**

(21) Anmeldenummer: **79200135.6**

(22) Anmeldetag: **21.03.79**

(51) Int. Cl.³: **F 02 C 6/12, F 02 B 37/00,
F 16 M 1/04**

(54) **Zweistüfiges Abgasturboladeraggregat.**

(30) Priorität: **19.02.79 CH 1609/79**

(43) Veröffentlichungstag der Anmeldung:
**03.09.80 Patentblatt 80/18**

(45) Bekanntmachung des Hinweises auf die Patenterteilung:
**18.05.83 Patentblatt 83/20**

(84) Benannte Vertragsstaaten:
**CH DE FR GB**

(56) Entgegenhaltungen:
**CH - A - 309 669
FR - A - 1 397 178
FR - A - 2 192 603
FR - A - 2 295 233
FR - A - 2 317 492
FR - A - 2 326 581**

**MOTORTECHNISCHE ZEITSCHRIFT, Band 39,
Nr. 5, Mai 1978, Seiten 209—215
Stuttgart, DE.
H. G. BOZUNG: "Zweistufige Aufladeaggregate
— Wirkungsgrade und Gefälleaufteilung im
Hinblick auf Vollast- und Teillastbetrieb"**

(73) Patentinhaber: **BBC Aktiengesellschaft Brown,
Boveri & Cie.
Haselstrasse
CH-5401 Baden (CH)**

(72) Erfinder: **Curiel, Georg
Pelikanstrasse 26
CH-5430 Wettingen (CH)**
Erfinder: **Naguib, Moustafa, Dr. Dipl.-Ing.
Flurstrasse 6
CH-5415 Nussbaumen (CH)**

Courier Press, Leamington Spa, England.

## Zweistufiges Abgasturboladeraggregat

Die Erfindung betrifft ein zweistufiges Abgasturboladeraggregate zur Hochaufladung eines Verbrennungsmotors gemäss Oberbegriff des Patentanspruchs 1.

Derartige Aggregate sind bekannt aus der "Motortechnische Zeitschrift", Band 39, Nr. 5, Mai 1978, Seite 212, Bild 10. Es sind hierbei zwei einstufige Turbolader, die sich in der Grösse um einen Stufensprung unterscheiden, mit den turbinenseitigen Stirnseiten aneinandergebaut. Durch diese Anordnung wird eine sehr kompakte Bauweise mit hohem Wirkungsgrad erreicht, da zwischen den Turbinen keine Ueberström- und Umlenkverluste entstehen.

Obschon dieses Aggregat an sich der Forderung nach Kompaktheit entspricht, trifft dies nicht zu für die mit Zusatzkomponenten wie bspw. Abgasleitung, Ladeluftzwischenkühler, Ladeluftendkühler, Bypass und ggfs. Brennkammer versehene Aufladeeinheit. Diese Zusatzkomponenten sind beim bekannten Aggregat seitlich oder unterhalb des Turboladers anzuordnen.

Der im Kennzeichen des Patentanspruchs 1 definierten Erfindung liegt deshalb die Aufgabe zugrunde, eine noch optimalere Platzausnützung für alle mechanisch und aerodynamisch zu verbindenden Moduli zu schaffen.

Zwar ist die disaxierte Hintereinanderschaltung zweier unterschiedlich grosser, einstufiger Abgasturbolader an sich bekannt (o.a. "MTZ", Seite 210, Bild 3). Jedoch wird hierbei durch zusätzliche Verbindungsleitungen am Motor sowohl die Zugänglichkeit als auch das Bauvolumen des Motors ungünstig. Darüber hinaus bewirken die langen Verbindungsleitungen zwischen Hochdruck- und Niederdruckteilen unerwünschte Strömungsverluste.

Bei einem erfindungsgemässen Aggregat ist es zweckmässig, wenn das Druckverhältnis des Niederdruckverdichters mindestens 3:1, vorzugsweise 4:1 und das Druckverhältnis des Hochdruckverdichters höchstens 3:1, vorzugsweise 2:1 beträgt. Dabei ergibt sich ein Gesamtdruckverhältnis von mindestens 6:1, vorzugsweise 8:1 für das Aggregat.

Auch diese Gefälleaufteilung ist bereits in der o.a. "MTZ", Kapitel 4.1 angedeutet, jedoch zwecks Wirkungsgradoptimierung, nicht jedoch zum Zwecke der maximalen Platzausnützung durch gezielte Versetzung der Laderlängsachsen.

Für die Hochaufladung von V-Motoren kann es vorteilhaft sein, mindestens zwei Hochdrucklader vorzusehen. Deren Längsachsen können in Bezug auf die Längsachse des Niederdruckladers annähernd symmetrisch zueinander angeordnet sein.

Ferner kann es zweckmässig sein, wenn die Turbine und/oder der Verdichter des Hochdruck- und/oder Niederdruckladers mehrstufig ausgebildet ist.

Nachstehend wird die Erfindung anhand der Zeichnung beispielsweise erläutert. Es zeigt

Fig. 1 einen Längsschnitt durch eine erste beispielsweise Ausführungsform eines erfindungsgemässen Abgasturboladeraggregates;

Fig. 2 einen Längsschnitt durch eine zweite beispielsweise Ausführungsform eines erfindungsgemässen Abgasturboladeraggregates;

Fig. 3 einen Schnitt längs der Linie III—III in Fig. 4 durch eine dritte beispielsweise Ausführungsform eines erfindungsgemässen Abgasturboladeraggregates;

Fig. 4 eine Stirnansicht in Richtung des Pfeiles A auf das in Fig. 3 dargestellte Abgasturboladeraggregat; und

Fig. 5 einen Schnitt analog Fig. 3 durch eine weitere beispielsweise Ausführungsform eines Abgasturboladeraggregates.

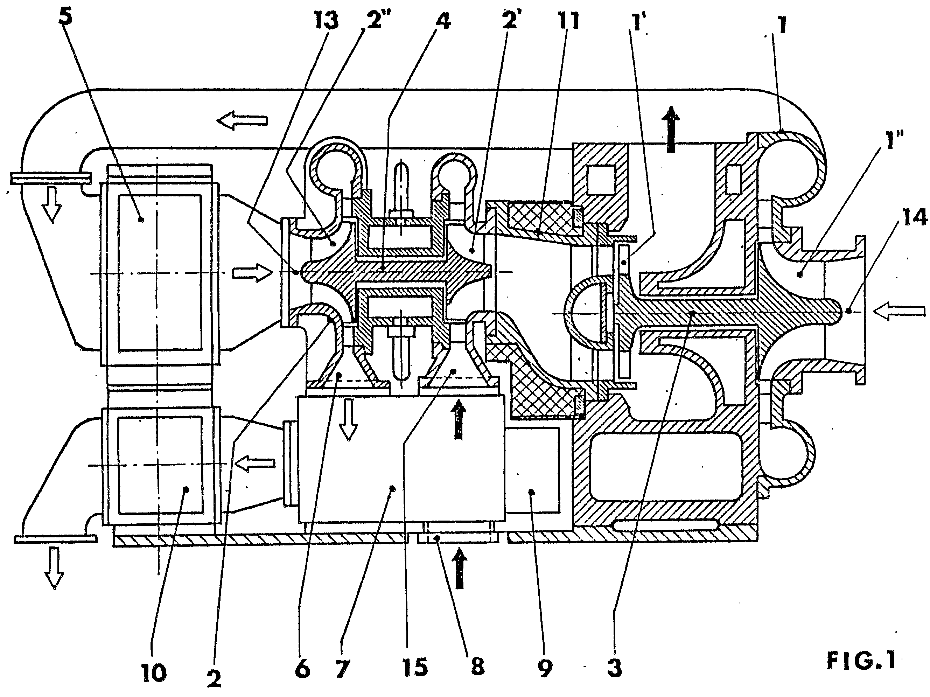

Wie aus Fig. 1 ersichtlich, weist das dargestellte zweistufige Abgasturboladeraggregat einen Niederdruckturbolader 1 sowie einen Hochdruckturbolader 2 auf. Jeder der beiden Turbolader 1, 2 ist mit je einem durch eine Turbine 1' bzw. 2' angetriebenen, auf je einer separaten Welle 3 bzw. 4 angeordneten Verdichter 1" bzw. 2" versehen. Die Turbine 2' des Hochdruckturboladers 2 ist dabei in Strömungsrichtung des Abgases gesehen der Turbine 1' des Niederdruckturboladers 1 vorgeschaltet. Zwischen dem Niederdruckverdichter 1" und dem Hochdruckverdichter 2" ist ein Niederdruck-Ladeluftkühler 5 zur Abkühlung der verdichteten Luft angeordnet.

Der Auslass 6 des Hochdruckverdichters 2" mündet in eine Bypass- und Regelventilanordnung 7, welche dazu dient, einen Teil der aus dem Hochdruckverdichter 2" austretenden, verdichteten Ladeluft dem vom aufzuladenden Verbrennungsmotor über die Auspuffleitung 8 zugeführten Abgas beizumischen, wonach dieses Gemisch mit Hilfe einer Brennkammeranordnung 9 zwischenerhitzt und dann der Hochdruckturbine 2' zugeführt wird, um auf diese Weise eine sogenannte Hyperbaraufladung zu erreichen.

Der nicht dem über die Auspuffleitung 8 zugeführten Abgas beigemischte Teil der aus dem Hochdruckverdichter 2" austretenden, verdichteten Ladeluft wird über den Hochdruck-Ladeluftkühler 10 dem aufzuladenden Verbrennungsmotor zugeführt.

Die Aufteilung des Gesamtdruckverhältnisses zwischen Hoch- und Niederdruckturbolader 2 bzw. 1 wird bei einem solchen Abgasturboladeraggregat so gewählt, dass ein möglichst grosses Druckverhältnis im Niederdruckturbolader verarbeitet wird. Mit modernen Niederdruckverdichtern 1" können ohne weiteres Druckverhältnisse von 4:1 bis 5:1 erreicht werden. Auf diese Weise kann beim Hochdruckverdichter 2" das Druckverhältnis relativ niedrig, das heisst etwa 2:1/3:1 gehalten werden, wodurch seine Aussendimensionen verglichen mit dem Niederdruckverdichter verhältnismässig klein werden. Infolge der geringeren äusseren Abmessungen des Hochdruckturboladers 2 ist es nun möglich, durch seitliche Versetzung der Welle 4 des Hochdruckturboladers 2 gegenüber der Welle 3 des Niederdruckturboladers 1 nach oben unterhalb dem Hochdruckturbolader 2 genügend Platz für die Bypass- und Regelventilanordnung 7 sowie die Brennkammer 9 zu schaffen ohne das von den äusseren Abmessungen des Niederdruckladers 1 in seiner Längsrichtung bestimmte Raumprofil zu überschreiten. Der Niederdruck-Ladeluftkühler 5 sowie der Hochdruck-Ladeluftkühler 10 sind innerhalb diesem durch die äusseren Abmessungen des Niederdruckturboladers bestimmten Raumprofil, an der Stirnseite des Hochdruckturboladers 2, angeordnet, so dass das gesamte zweistufige Abgasturboladeraggregat eine äusserst kompakte Modular-Einheit bildet, welche eine optimale Platzausnützung garantiert.

Die Kombination von Hochdruck- und Niederdruckturboladern 2 bzw. 1 mit keiner, einer oder mehrerer der notwendigen Zusatzkomponenten zu einer kompakten Aufladeeinheit kann in beliebiger Art und Weise dem aufzuladenden Motor sowie einen Bedürfnissen angepasst werden.

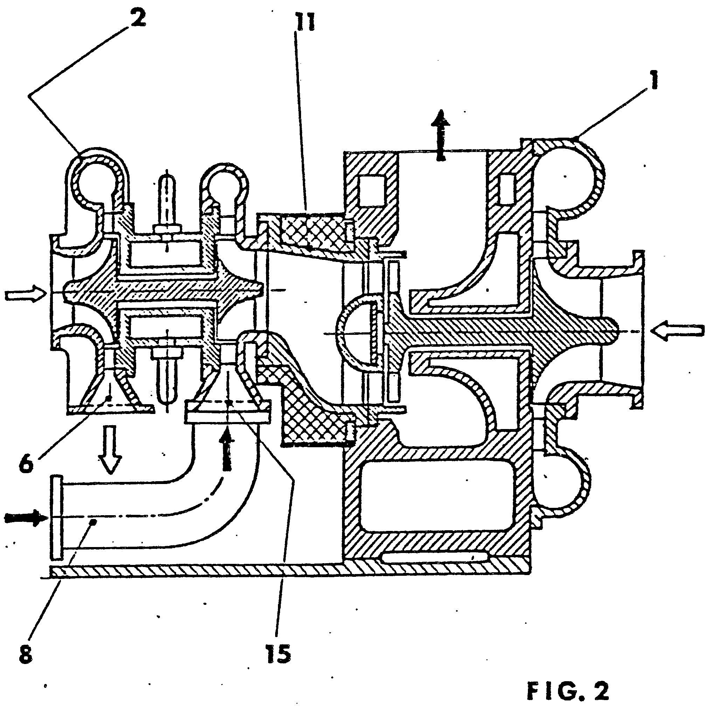

In Fig. 2 ist eine zweite beispielsweise einfache Ausführungsform eines zweistufigen Abgasturboladeraggregates dargestellt, welches sich von der in Fig. 1 dargestellten Ausführungsform hauptsächlich dadurch unterscheidet, dass alle Zusatzkomponenten nicht benötigt werden. Die Versetzung der Welle 4 des Hochdruckturboladers 2 gegenüber der Welle 3 des Niederdruckturbolars 1 wird hier zur Platzbeschaffung für die Auspuffleitung 8 ausgenutzt.

Auf diese Weise ist es möglich, den Niederdruckturbolader 1 unmittelbar an den aufzuladenden Motor angrenzend anzuordnen, da dank der erfindungsgemässen Ausbildung neben dem Hochdruckturbolader 2 immer noch genügend Platz für die Auspuffleitung 8 verbleibt. Selbstverständlich ist es auch möglich, den unterhalb dem Hochdruckturbolader 2 vorhandenen Raum anstatt nur für die Auspuffleitung 8 auch für einen oder zwei Ladeluftkühler auszunützen.

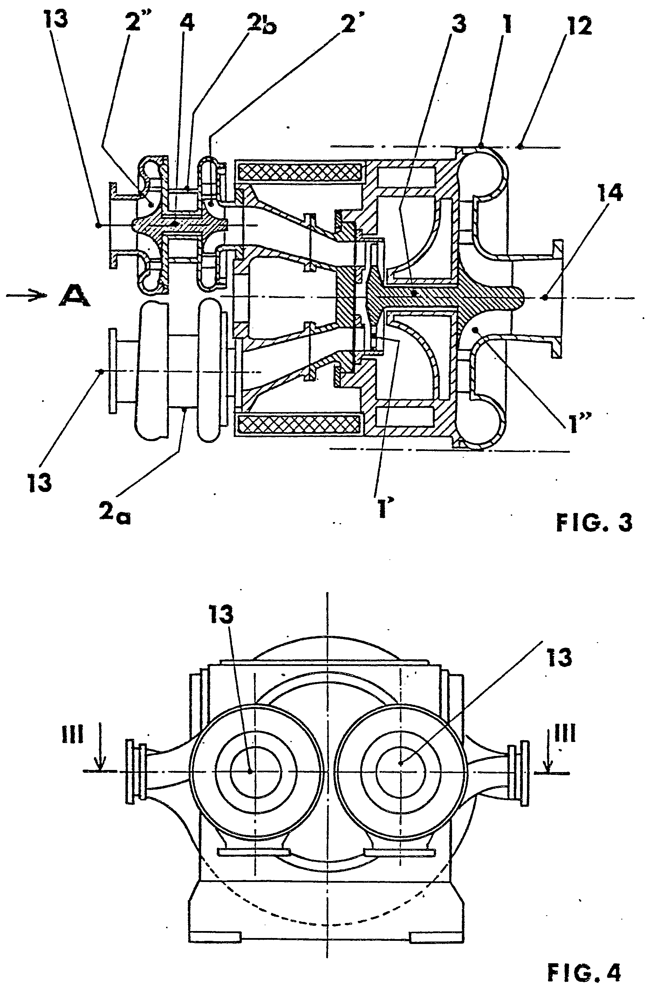

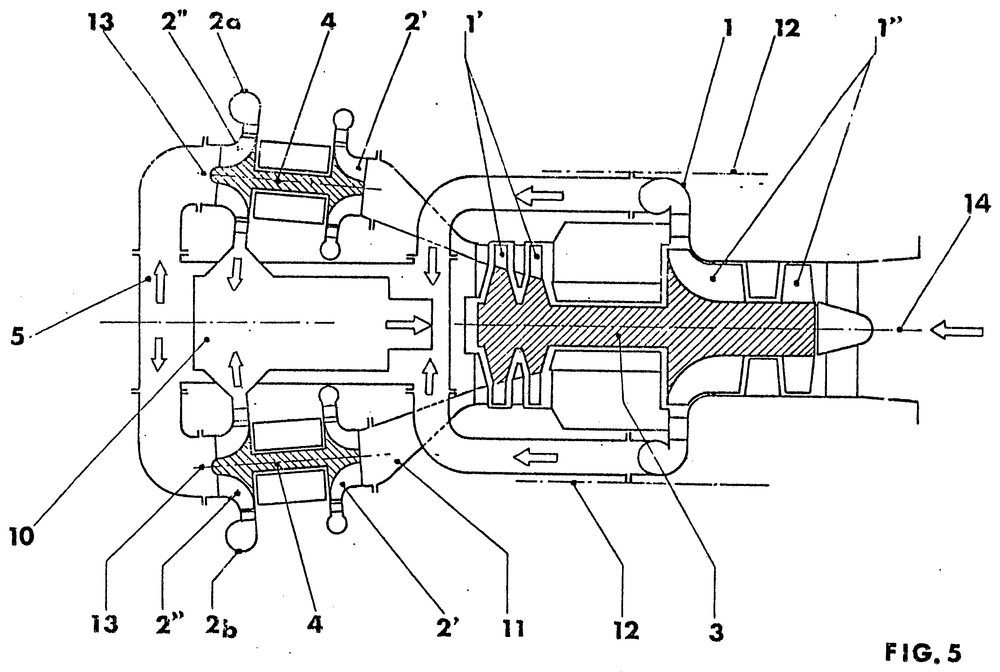

Bei der in den Fig. 3 und 4 dargestellten insbesondere für die Hochaufladung von V-Motoren geeigneten Ausführungsform ist der Niederdruckturbolader 1 mit zwei verhältnismässig kleinen Hochdruckturboladern 2a und 2b verbunden, wobei die Wellen 4 der beiden Hochdruckturbolader 2a und 2b bezüglich der Niederdruckturbolader-Welle 3 seitlich versetzt, jedoch symmetrisch zueinander angeordnet sind.

Die in Fig. 5 dargestellte Ausführungsform unterscheidet sich von der in den Fig. 3 und 4 dargestellten Ausführungsform hauptsächlich dadurch, dass der Niederdruckturbolader 1 einen zweistufigen Axial/Radial-Verdichter 1″ und eine zweistufige Axialturbine 1′ aufweist, und die beiden Hochdruckturbolader 2a und 2b soweit von der Mittelaxe des Niederdruckturboladers 1 distanziert sind, dass der Platz zwischen diesen beiden Hochdruckturboladern 2a und 2b zur Anordnung eines Niederdruck-Ladeluftkühlers 5 und eines Hochdruck-Ladeluftkühlers 10, die zu einem Monoblock zusammengefasst sind, ausgenützt werden kann, ohne dass die beiden Hochdruckturbolader 2a und 2b in einer durch deren beide Wellen gelegten Ebene betrachtet wesentlich über das Umhüllungsprofil des Niederdruckturboladers 1 hinausragen.

Selbstverständlich sind beim erfindungsgemässen Abgasturboladeraggregat sämtliche Arten von Turbinen und Verdichtern, z.B. axial, radial, diagonal axial/radial, axial diagonal, etc., ein- oder mehrstufig, verwendbar.

**Patentansprüche**

1. Zweistufiges Abgasturboladeraggregat zur Hochaufladung eines Verbrennungsmotors mit einem Niederdrucklader und mindestens einem Hochdrucklader, wobei jeder der Lader mit je einem durch eine Turbine angetriebenen, auf je einer separaten Welle angeordneten Verdichter versehen und die Turbine des Hochdruckladers in Strömungsrichtung des Abgases der Turbine des Niederdruckladers vorgeschaltet ist, wobei ferner der Hochdrucklader geometrisch kleiner als der Niederdrucklader ist und für beide Turbinen eine Stirn-an-Stirn Bauweise vorgesehen ist, dadurch gekennzeichnet, dass die Mittelachsen (13, 14) der über ein Verbindungsstück (11) mechanisch und strömungsmässig gekoppelten Hochdrucklader (2) und Niederdrucklader (1) zueinander versetzt sind, und dass zwecks kompaktem Anbau von Zusatzkomponenten (8, 5, 10, 6, 7, 9) vorzugsweise an oder neben dem Hochdrucklader (2) die die äusseren Dimensionen der Ladergehäuse bestimmenden Druckverhältnisse des Hochdruck- und des Niederdruckladers (2 bzw. 1) derart gewählt sind, dass bei Ansicht in Richtung der Niederdrucklader-Längsachse (14) der geometrisch kleinere Hochdrucklader (2) und die an oder neben ihm angeordneten Zusatzkomponenten sich innerhalb der Aussenkonturen des geometrisch grösseren Niederdruckladers (1) befinden oder diese nur unwesentlich überragen.

2. Abgasturboladeraggregat nach Anspruch 1, dadurch gekennzeichnet, dass es mindestens zwei mit dem Niederdrucklader (1) verbundene Hochdrucklader (2a, 2b) aufweist, und die Hochdrucklader-Achsen (4) bezüglich der Niederdrucklader-Achse (3) mindestens annähernd symmetrisch zueinander angeordnet sind.

3. Abgasturboladeraggregat nach Anspruch 1 oder 2, dadurch gekennzeichnet, dass die Turbine (2', 1') und/oder der Verdichter (2", 1") des Hochdruck- und/oder Niederdruckladers (2 resp. 1) mehrstufig ausgebildet ist.

**Revendications**

1. Groupe turbocompresseur à gaz d'échappement à deux étages pour la suralimentation à haute pression d'un moteur à combustion interne au moyen d'un turbocompresseur à basse pression et d'au moins un turbocompresseur à haute pression, chacun des turbocompresseurs étant pourvu d'un compresseur monté sur un arbre séparé et entraîné par une turbine et la turbine du turbocompresseur à haute pression précédant, dans le sens de l'écoulement des gaz d'échappement, la turbine du turbocompresseur à basse pression, le turbocompresseur à haute pression étant, en outre, géométriquement plus petit que le turbocompresseur à basse pression et le mode de construction prévu pour les deux turbines étant un mode tête-bêche, caractérisé en ce que les axes centraux (13, 14) du turbocompresseur à haute pression (2) et du turbocompresseur à basse pression (1) qui sont raccordés l'un à l'autre mécaniquement et d'une manière permettant l'écoulement par une pièce de raccordement 11 sont décalés l'un par rapport à l'autre et, en vue d'assurer une adjonction compacte d'accessoires (8, 5, 10, 6, 7, 9), de préférence au turbocompresseur à haute pression (2) ou à côté de celui-ci, les rapports de compression du turbocompresseur à haute pression et du turbocompresseur à basse pression (2 et 1) qui déterminent les dimensions extérieures de l'enveloppe sont choisis d'une manière telle que, vu dans la direction de l'axe longitudinal (14) du turbocompresseur à basse pression, le turbocompresseur à haute pression géométriquement plus petit (2) et les accessoires montés sur le turbocompresseur (2) ou à côté de lui s'inscrivent dans les limites des contours extérieurs du turbocompresseur à basse pression (1) géométriquement plus volumineux ou ne les dépassent que de manière insignifiante.

2. Groupe turbocompresseur à gaz d'échappement suivant la revendication 1, caractérisé en ce qu'il comporte au moins deux turbocompresseurs à haute pression (2a, 2b) raccordés au turbocompresseur à basse pression (1) et les axes (4) des turbocompresseurs à haute pression sont disposés au moins à peu près symétriquement par rapport à l'axe (3) du turbocompresseur à basse pression.

3. Groupe turbocompresseur à gaz d'échappement suivant la revendication 1 ou 2, caractérisé en ce que la turbine (2', 1') et/ou le compresseur (2", 1") du turbocompresseur à haute pression et/ou du turbocompresseur à basse pression (2 et 1) sont respectivement à plusieurs étages.

**Claims**

1. Two-stage exhaust gas turbocharger unit for high-level supercharging of an internal combustion engine with a low-pressure supercharger and at least one high-pressure supercharger, wherein each supercharger is provided with a compressor driven by a turbine and located each on a separate shaft and the turbine of the high-pressure supercharger is connected upstream of the turbine of the low-pressure supercharger relative to the flow direction of the exhaust gas and furthermore, the high-pressure supercharger is geometrically smaller than the low-pressure supercharger and a face-to-face construction is provided for the two turbines, characterised in that the central axes (13, 14) of the high-pressure superchargers (2) and the low-pressure superchargers (1), which are mechanically and flow connected by a connecting piece (11), are displaced relative to one another and in that, with the objective of a compact installation of additional components (8, 5, 10, 6, 7, 9) preferably on or near the high-pressure supercharger (2), the pressure ratios of the high-pressure and low-pressure superchargers (2 and 1 respectively), which determine the external dimensions of the supercharger casings, are so chosen that, when viewing in the direction of the low-pressure supercharger longitudinal axis (14), the geometrically smaller high-pressure supercharger (2) and the additional components arranged on or near it remain within the external contours of the geometrically larger low-pressure supercharger (1) or extend beyond these contours only to an unimportant extent.

2. Exhaust gas turbocharger unit according to Claim 1, characterised in that there are at least two high-pressure superchargers (2a, 2b) connected to the low-pressure supercharger (1) and the high-pressure supercharger axes (4) are at least approximately symmetrically arranged relative to one another with respect to the low-pressure supercharger axis (3).

3. Exhaust gas turbocharger unit according to Claim 1 or 2, wherein the turbine (2', 1') and/or the compressor (2", 1") of the high-pressure and/or low-pressure supercharger (2 and 1 respectively) are of multi-stage design.

FIG.1

FIG. 2

FIG. 3

FIG. 4

3

FIG. 5

14, 1'', 12, 1, 12, 1', 3, 2', 11, 2', 4, 2'', 4, 2a, 2', 2'', 2b, 13, 5, 10, 13

4